# EUROPEAN PATENT SPECIFICATION

(11) **EP 0 912 919 B1**
(45) Date of publication and mention of the grant of the patent: **11.06.2003**
(21) Application number: 97901699.5
(22) Date of filing: 28.01.1997
(51) Int. Cl.: G06F 1/00, G08B 13/14

(54) **IMMOBILISATION PROTECTION SYSTEM FOR ELECTRONIC COMPONENTS AND METHOD THEREFOR**
SCHUTZSYSTEM ZUM BLOCKIEREN VON ELEKTRONISCHEN GERÄTEN UND BAUTEILEN UND VERFAHREN HIERFÜR
SYSTEME DE PROTECTION D'IMMOBILISATION POUR PRODUITS ET ELEMENTS ELECTRONIQUES ET PROCEDE CORRESPONDANT

(30) Priority: 25.07.1996 GB 9615597
(43) Date of publication of application: 06.05.1999
(73) Proprietor: Collins, Peter David, Hockley, Essex SS5 4LW (GB); Royer, Karl William, Aylesham, Kent CT3 3LT (GB); Bowyer, Mark David James, Havant, Hants PO9 2RR (GB)
(72) Inventor: Collins, Peter David, Hockley, Essex SS5 4LW (GB); Royer, Karl William, Aylesham, Kent CT3 3LT (GB); Bowyer, Mark David James, Havant, Hants PO9 2RR (GB)
(74) Representative: Doble, Richard George Vivian
(86) International application number: GB9700241
(87) International publication number: WO98004967

(56) References cited:
- EP-A- 0 387 581
- EP-A- 0 588 519
- EP-A- 0 740 037
- WO-A-96/03728

## Description

This invention relates to security for electronic products and systems.

The theft of electronic products (e.g. computer, video and hi-fi appliances) and VLSI components (CPUs and SIMMs) has become a matter of great concern to both companies and individuals. Currently, most products and components lack unforgeable serialisation capable of linking them to their registered owner. As a result, criminals have the incentive that stolen equipment can be re-sold as new with negligible depreciation.

Currently, such crime is deterred by physical security systems protecting premises and/or individual equipment. Many of these systems hinder the normal use of such equipment and pose no real deterrent to the determined criminal.

The knowledge that the ownerships of products or components are quickly traceable is a significant deterrent to the criminal. However, even if the equipment is traceable, the criminal can re-sell equipment which is still fully functional. A greater level of deterrent to the criminal is the publicised knowledge that, taken away from an authorised user, a product or component is rendered inoperative.

US-A-4,759,062 discloses a means for immobilising micro-processor controlled electronic equipment using a "challenge-response" authentication scheme between equipment and an authorised service centre. The equipment sends a challenge that is communicated to the authorised service centre which computes a response which is communicated back to the equipment. If the equipment receives an incorrect response then it renders the equipment inoperative. The cryptographic algorithm used to compute responses in each piece of equipment is identical, in such a way that, if the algorithm in one piece of equipment is compromised, then all other equipments are compromised.

GB-A-2,251,503 discloses a security system that prevents unauthorised parts embedded with electronic protection equipment from being used in a car. The protection equipment is added to a part in such a way that removal of the protection equipment would cause terminal damage to the protection equipment. This system employs a "challenge-response" authentication scheme between a controller and its parts (i.e. in the opposite direction to the above art). The controller sends a coded signal to the part which processes the signal and provides a response. If a part answers the challenge incorrectly then the controller sends immobilisation commands to that part and other parts in the system, in order to render them inoperative.

However, components removed from a protected vehicle and moved to an unprotected vehicle will function normally and furthermore lack means of unforgeable identification.

WO-96/0372A describes a system which aims to protect electronic equipment against theft or misuse. In use the electronic device generates an identification signal and transmits this to a remote validating means which includes means for determining the location at which the electronic device is located. The validating means then compares the determined location with the proper location of the electronic device and if this is correct, transmits an authorisation signal which allows the electronic device to operate, otherwise the electronic device is disabled.

EP-A-0,588,519 describes a communication system comprising two modems connected via a public telephone line. The modems periodically carry out a challenge response exchange to attempt to protect the data transmissions from wire-taps and spoofing. If an invalid response is returned in reply to the challenge then the modem disconnects breaking the transmission.

EP-A-0,387,581 describes a security system for vehicles which transmits a codeword to a validating system which checks the cord word and, if it is valid, sends a validation signal to the central locking system of the vehicle.

EP-A-0740037 discloses a security device for deterring theft of a piece of equipment into which a security device is incorporated. The security device periodically implements a challenge/response routine with a remote security centre and if an appropriate response is not received, the security device prevents the equipment operating properly. In the disclosed challenge/response routine the security device obtains a random number, encrypts said random number using a first key (K1) and sends it to the remote security centre. This is the challenge. The remote security centre decrypts the challenge with the key (K1) encrypts it with a second key (K2) and send the re-encrypted challenge back to the security device. This is the response. The security device decrypts the response with key (K2) and checks that the decrypted number is the same as the original random number. This proves to the security device that the message came from an entity with knowledge of the keys (K1 and K2), presumed to the remote security centre. The remote security centre provides a response only if the security device is authorised to continue operation. The challenge issued by the security device may include data representing the identity or location of the user, such as a source network address of the security device.

The invention is defined in claims 1, 11, 14 and 16. Throughout the specification the term equipment refers either to a product, module or component.

Protected electronic equipment is provided with an embedded electronic immobilization protection device (IPD), such that from power on, the IPD can control the useful operation of the equipment.

The IPDs may be embedded within the equipment at one of three levels as:
(i) an additional component inside a housing or mounted on a printed circuit board;
(ii) an additional component bonded to components, particularly important, essential or high value components; or
(iii) additional logic integrated at mask (or multi-chip module) level into essential or high value integrated circuits.

Essential components are those without which the product of which they form a part cannot function usefully. Level (i) provides the lowest level of deterrent because it may be possible to by-pass the IPDs. Furthermore, there is no deterrent against extraction of high values components. In level (ii) the IPD is bonded to and encapsulates components in such a way that by-pass or removal of the IPD causes terminal damage to the protected component. Level (iii) provides the highest level of deterrent because the IPD is truly integral with the protected component, making by-pass extremely difficult.

The rightful owner of a piece of protected equipment is provided with controlled access to a security service provider (SSP). IPDs are programmed by the manufacturer or retailer with a unique part number (P), one or more cryptographic functions, and cryptographic keys. To initiate protection, the rightful owner registers the IPDs with a SSP. The manufacturer or retailer advises the SSP of the necessary cryptographic functions and keys, using a secure channel.

When protected equipment is powered on, a communication link between the IPDs and the SSP is established. This link can involve dedicated functions and communication paths within the product. Alternatively, the pre-existing microprocessor and communication units within the product can be programmed to provide the link. Once the link is established, each IPD sends its part number P together with a random "challenge". The SSP uses the received part number P to retrieve the appropriate cryptographic function(s) and cryptographic key(s) from a database. The SSP can then use the challenge, together with the retrieved function(s) and key(s) to compute a cryptographically secure response.

If the product or component containing an IPD has not been reported stolen, then the SSP replies with a valid cryptographically secure "response", otherwise it replies with an invalid "response". An invalid "response" could be no response at all. If the IPD receives an invalid "response", or when a time limit has elapsed without a valid "response", then it renders the protected equipment inoperative. If the IPD receives a valid "response", inside the time limit, then it allows the protected equipment to function normally. In either case, if the time limit, measured from power on or some other appropriate point, has elapsed and the IPD has not received a valid "response", then it disables the protected equipment. The time limit is short enough (typically a few minutes) to prevent any useful operation of the protected equipment, but sufficient to allow time to send and receive the required sequence of challenges and responses from the SSP.

The IPD can be used in combination with the SSP to provide authorised users with a means to uniquely and unforgeably identify protected equipment. The IPD and SSP can provide this capability in a number of ways.

One such way, that uses a uni-directional protocol, is to provide access to a cryptographically secure checksum derived from the combination of the part number P, cryptographic key information and a randomly generated code from the IPD. By validating two or more consecutive checksums, the SSP can be sure the IPD part number corresponds to the key information held in the SSP database.

A second way, that uses a bi-directional protocol, carries out a normal validation process whereby the SSP responds correctly to a challenge issued by recovered equipment and the user monitors the status of the equipment. If the equipment is operational then its part number is genuine. If the equipment is immobilised then the user can infer that the IPD has been tampered with.

Methods of identification, such as those described above, provide unique identification in that the code sequence used to perform the identification is unique to each IPD and, furthermore, is unforgeable in that replaying previous code exchanges between the IPD and SSP will not allow positive identification of the protected equipment. In the latter realisation, a unique response from all IPDs to a given challenge is required. This can be achieved by using a unique cryptographic key for each device or by using the unique part number P in the computation and verification of the cryptographically secure response.

By using this unique and unforgeable identification, a stolen and recovered product containing one or more IPDs can be positively identified and traced to its registered owner. When returned, the registered owner contacts the SSP in order to authorise the SSP to supply valid responses to the protected equipments, after which, the protected equipments function as normal.

Some portable equipment maintain continuous power to specific components. To ensure such equipment is immobilized in the wrong hands, the IPD may be arranged so that the "challenge - response" cycle is repeated periodically, e.g. every eight hours. The duration of this interval can be varied to suit organizational or operational requirements.

Some prior art systems are vulnerable to disclosure of their principle of operation. A criminal could either monitor an authorised user's challenges and responses or submit their own challenges to an SSP and monitor the response. By doing this a series of challenge-response data can be accumulated and the coding system used in the SSP/IPD deciphered. Once this is done the criminal can calculate a valid response to any challenge, for example by correctly duplicating the function of the SSP.

For extra security, use of a unique cryptographic key in each IPD protects the concept of the system from compromise, i.e. if the keys within a single IPD are compromised the system as a whole is not compromised. Thus even if the operation of the system is known, it is still necessary to find out the unique key for each IPD to use the protected equipment. The security of the system may be further enhanced by allowing the manufacturers and system operators to agree their own algorithms. However, it is in the interests of the manufactures and operators to choose "strong" cryptographic algorithms. The term "strong" refers to algorithms that remain secure in the event of exposure, i.e. if the algorithm within one IPD is exposed then IPDs using the same algorithm are not compromised. Prefixing the part number P to the "challenge" identifies the IPD to the SSP and allows the SSP to select the correct algorithms and keys for the IPD requesting the "response." Furthermore, the SSP uses the part number P to search in a database containing the status of IPDs, e.g. unregistered, registered, stolen, or recovered, to confirm the status of the IPD.

An SSP can provide its users with several modes of connection: (i) circuit or packet access to a central security server; (ii) packet access to a local security server; or (iii) direct access to a plug-in security server.

Mode (i) is a centralized mode whereby the product connects to a central security server using any available means of communication, e.g. an individual can use a modem to connect via a PSTN; a company can use its LAN to connect via a WAN gateway.

Mode (ii) is a distributed mode of operation in which local servers connect when necessary to a central security server. Local security servers contain at least one IPD per server, so that, in the event a server is stolen, equipment stolen from the same premises is not compromised. There are two types of local security server: (i) a slave server that computes "responses"; (ii) a cache server that requests several "challenges" in advance and stores the "responses" obtained from a central server. If possible, the local server uses volatile storage. However, information in non-volatile storage is stored, encrypted and decrypted on-the-fly. A single local server might be contained in a house or small business, whereas several might be used in large company or organization. Consumer electronics inside a house can communicate to a local server using an infra-red network. Large office buildings might use a hierarchy of cache servers connected to a slave server.

In mode (iii), a product has direct connection to a smart-card (or similar device) that computes "responses". The smartcard contains the key information necessary to acknowledge the IPDs within the product it serves. When the product is unused, it is the users responsibility to remove and store the smartcard safely, in order to prevent the product from operating. The smartcard itself has a given lifetime that once exceeded renders the card useless. The smartcard can be reactivated by the SSP. If a product or component is stolen then the smartcard can be presented to an insurer as proof of immobilization.

Users may wish to purchase products and components with the IPD security not activated. At some later date, the user can enable the IPD security and enter the system by contacting an SSP. This allows equipment fitted with IPDs to be used as normal in systems without connection to and authorisation of an SSP. This also avoids the need to manufacture two types of device, i.e. with IPD and without IPD.

Once enabled, the IPD security can preferably not be disabled. However, SSP users could leave the system by obtaining a lifetime smartcard covering the users products and components. However, once the user obtains such a card, the SSP can offer the user no security for these products and components.

The embedded and cryptographically secure natures of IPDs is sufficient so that individuals, outside the realms of approved manufacturers and the SSPs, including the rightful owner, are unable to provide a method, or gain information, to by-pass or enable IPDs without a valid "response" from an SSP.

IPDs incorporated into data storage products can provide data security in addition to immobilization. For example, the control processor on a fixed disk can be programmed, from power on, not to transfer data on some or all of the disk until a valid "response" is obtained from an SSP. If the disk is reported stolen, then data on the disk in the specified partitions cannot be read at all, not even for a limited time.

IPDs may be used to provide controlled access to the equipments they immobilize. For example, outside working hours, the SSP can provide invalid responses to selected IPD "challenges", in order to ensure that certain items of equipment cannot be used outside pre-determined hours.

The SSP can store a day-to-day record of the products and equipment that send IPD "challenges". The SSP can use this record to provide an audit facility to its customers. This is especially useful for computer memory modules, plug-in cards and peripherals that are moved around in a large organization, e.g. the SSP can provide day-to-day lists of products containing IPDs that have been moved from one machine to another.

The length of time between "challenge - response" cycles can be lowered in order to provide customers with a usage monitoring capability. However, the SSP cannot obtain such information when equipment is switched on and is unused.

Furthermore, the use of IPD's can be extended for use in all manner of verification purposes. For example, credit cards or ID cards could be provided with IPD's using smart card technology, such that they do not provide data or authorisation if they are lost or stolen etc.

By operating an alternate challenge response mechanism, IPDs can be used to grant access to restricted hardware and software services. The party providing the service(s) advises the SSP of what service(s) the said IPD can be granted access to. When a service user requests a service from a given party, the party operating the service sends two challenges: the first to a nominated IPD, within the equipment of the service user, and the second, a copy of the first, prefixed with an identifier for the requested service, to the SSP. Both the SSP and the IPD provide the party with responses to the challenge. If the user has been granted access to the requested service (determined by the received identification code), then the SSP answers the party's challenge correctly, otherwise, it answers incorrectly. Finally, the party compares the responses received from the SSP and IPD. If they are identical, then the party grants access to the requested service, otherwise, it denies access. In this scheme, the party providing the service has no knowledge (or need to know) of the cryptographic algorithms and keys held within the IPDs and the SSP.

The present invention will be more clearly understood from the following description, given by way of example only, with reference to the accompanying drawings in which:
Figure 1 is a flow diagram that shows the computational functions inside an embodiment of an IPD and SSP;
Figure 2 is a personal computer system incorporating IPDs;
Figures 3 and 4 show two methods in which a single PC can connect to an SSP; and
Figures 5, 6 and 7 show how corporate users with existing networks can connect to an SSP.

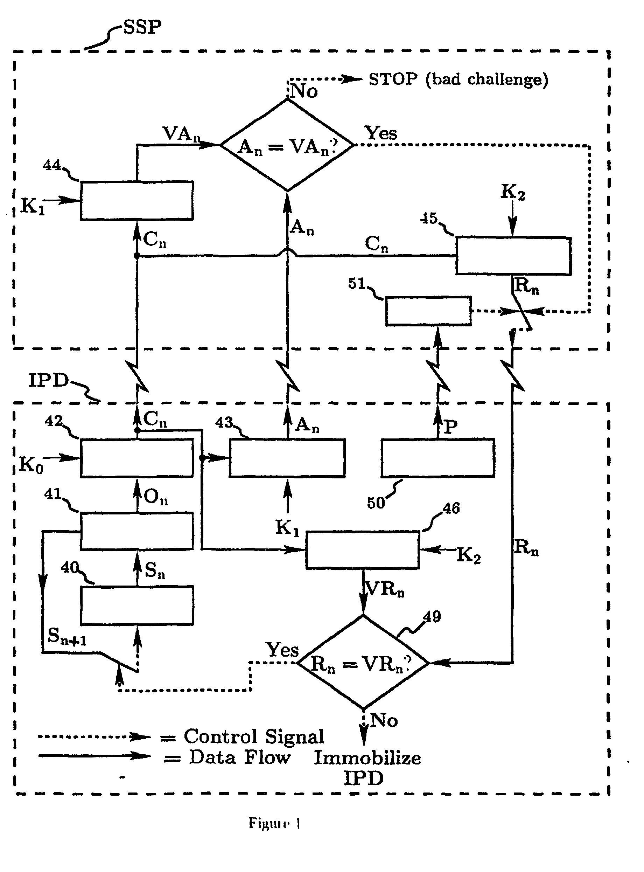

Referring to figure 1. The IPD "challenge" is a non-recurring cryptographically secure random number. To achieve the non-recurring property, the IPD contains a non-volatile state register 40. The IPD loads the contents of the state register Sₙ, into a sequence generator 41 from which a new unique state, Sₙ₊₁ is generated, but not immediately used. The output of the sequence generator, Oₙ, is fed into a cryptographic encoder 42. The output, Oₙ is derived from Sₙ and preferably not reversibly such that Sₙ is not derivable from Oₙ. This can be achieved, for example, by only using some of the bits of Sₙ to produce Oₙ. The encoder 42 uses a cryptographic function or algorithm to code the input Oₙ using a key K₀ stored inside the IPD. The output Cₙ, from the encoder 42 is the "challenge". The key K₀ need not be unique amongst all IPDs. However, if the key K₀ is unique, then each IPD produces a unique sequence of cryptographically secure random "challenges". This level of refinement makes the system more difficult to attack.

To allow an SSP to filter "challenges" from rogue users, the IPD incorporates a means for the SSP to validate "challenges". To achieve this the IPD must uniquely identify itself to the SSP. For example, an attacker, wishing to deny SSP service from legitimate users could flood SSP connections with rogue "challenges" and possibly monitor the responses. One such means to prevent this is to send an authenticator, Aₙ, derived from the "challenge", Cₙ, using a second encoder 43 with the key, K₁, stored in the ROM.

At the SSP, the received "challenge" is fed into an encoder 44 with the key K₁, obtained from a lookup database based on the part number *P* of the IPD. The first encoder 43 and second encoder 44 carry out the same coding operation as each other. If the output, VAₙ, of encoder 44 and the received authenticator Aₙ from the IPD are the same then the "challenge", Cₙ, is valid. The received "challenge" Cₙ is fed into a third encoder 45 utilising the key K₂, obtained from the lookup database using *P* generated by the part number generator 50. The output from the third encoder is the cryptographically secure "response", Rₙ. Returning to the IPD, Cₙ is fed into a fourth encoder 46 utilising the key K₂, stored inside the IPD. The third 45 and fourth 46 encoders carry out the same coding operation. The output, VRₙ, of the fourth encoder 46 and the received "response" Rₙ (from the SSP) are compared by a comparator 49 and if they are equal, then the protected product or component is allowed to function and the register 40 is loaded with the state Sₙ₊₁. If the comparison 49 fails, then the product or component is disabled and the register 40 remains in its original state, Sₙ. This means that an unauthorised user is unable to monitor the sequence of challenges from the IPD as these only change when a valid challenge-response cycle occurs.

The SSP monitors 51 the part number P and checks to ensure that the corresponding IPD has not been reported stolen or otherwise. If so, an invalid response or no response is output.

The cryptographic function used in the encoders 42-46 shown in figure 1 can be block cipher algorithms in which the key is directly applied. Alternatively, the cryptographic function can be a secure hash function in which the key is mixed with the input to the function. The non-recurring property of the "challenge" is highly desirable, but not essential. An alternative is to use a true random number generator in place of the non-volatile state register and sequence generator.

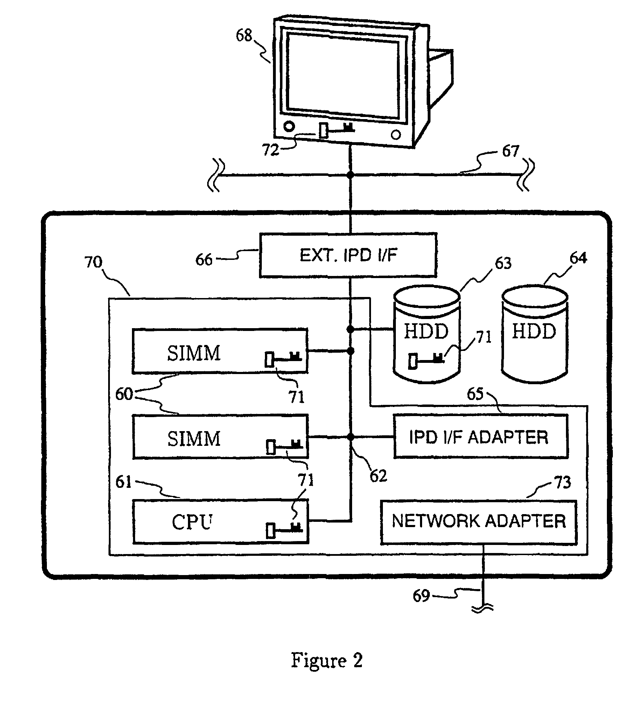

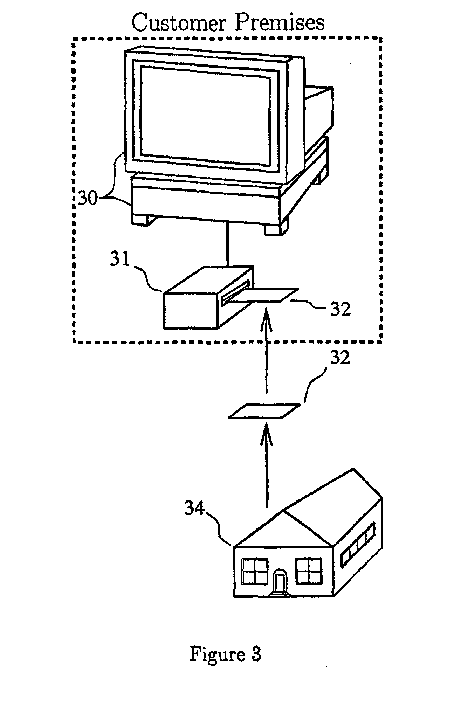

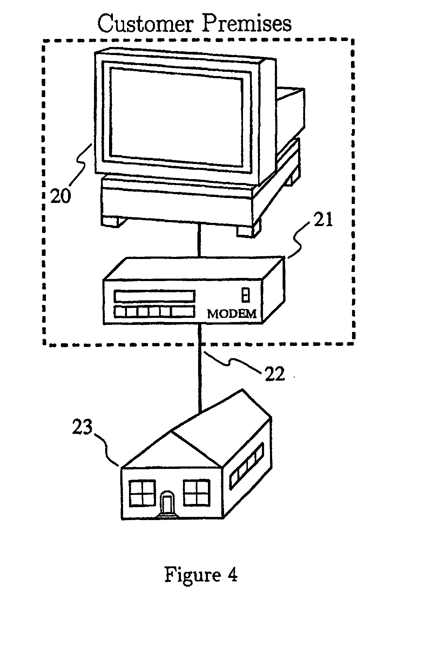

A personal computer (PC) system incorporating IPDs 71 72 is shown in figure 2. Internal IPDs are connected via a simple bus 62 to the IPD interface adaptor 65, integrated on the PC motherboard 70. Alternatively, the IPD interface adaptor is a plug-in card. External IPDs 72 are connected to external IPD bus 67 and use a buffered connection 66 to the IPD interface adaptor 65. Alternatively, external IPDs can use existing connections to the computer, eg. printers can use a parallel or serial port and SCSI peripherals can use the SCSI bus. The PC has at least one means to access the SSP, eg. a network adaptor 73, a smartcard interface (see figure 3), or a modem attached to a PSTN (see figure 4).

When the PC is turned on, IPDs in system critical components 60 61 are enabled, for a limited period of time, allowing the computer to function normally. This time is sufficient for the PC to load its operating system, establish communication with the SSP, to send "challenges" and receive "responses". The details of procedure are as follows. The PC loads its operating system and starts a special process that (i) collects part numbers and "challenges" from the components 60 61 63 68 using the IPD interface adapter 65; (ii) establishes a connection to the SSP; (iii) sends the part numbers and "challenges" to the SSP; (iv) receives "responses" from the SSP; and (v) dispatches "responses" to the appropriate IPDs. Any component in the PC system that does not belong to its rightful owner receives an invalid "response" from the SSP. In this case, the IPD will disable the component after an additional short delay (to allow the computer fail safe). If all "responses" are valid, then the computer continues to function normally and with system-critical functions enabled. A key feature is, therefore, that existing hardware (such as 60 61) and software (and network 69 73) resources within the PC system are used to communicate with the SSP. The path between the IPD interface, on the PC motherboard, and the SSP can be encrypted in order to prevent an eavesdropper auditing the property of an individual or organization.

Figure 3 shows a PC 30 connected to a smartcard interface 31. The user is issued a smartcard 32 by the SSP 34. On receipt of the smartcard, the user is able to operate his system for a set period (e.g. one year), after which the SSP can use manual or electronic means to update the card, e.g. using a modem (not shown) to establish a communication link from the smartcard to the SSP, or by returning the card to the SSP for replacement or revalidating.

Figure 4 shows a PC 20 that connects to an SSP 23 using a modem 21 connected to a public switched telephone network (PSTN) 22. The connection can be to a modem server located in the SSP. Alternatively, the PC can dial-up a local Internet provider and communicate to an Internet connected SSP.

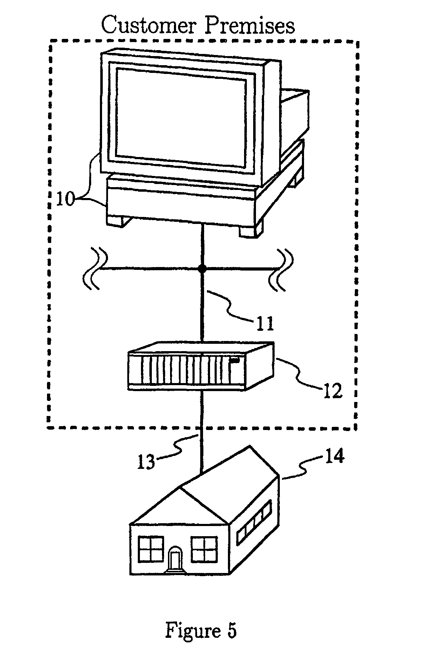

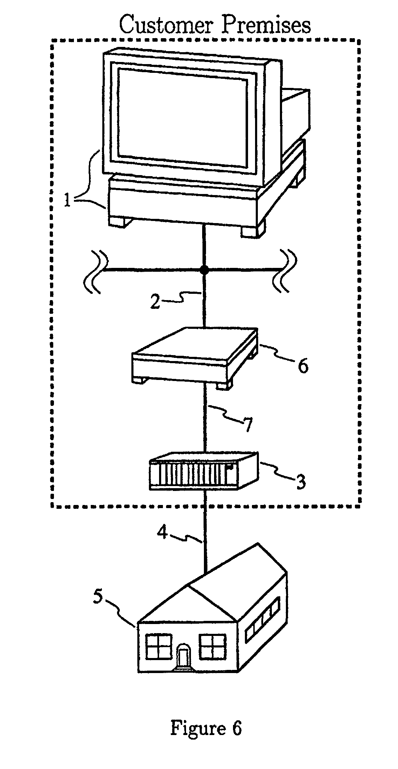

Figure 5 shows a PC 10 that connects to an SSP 14 via a LAN 11, a WAN 13, and a firewall 12. Figure 6 shows a PC 1 that connects to local security server 6 via a LAN 2. In turn, the local security server connects to the SSP 5 via (i) a firewall 3 and WAN 2 and/or (ii) a modem link (not shown). The local security server reduces the WAN bandwidth required by a large organization.

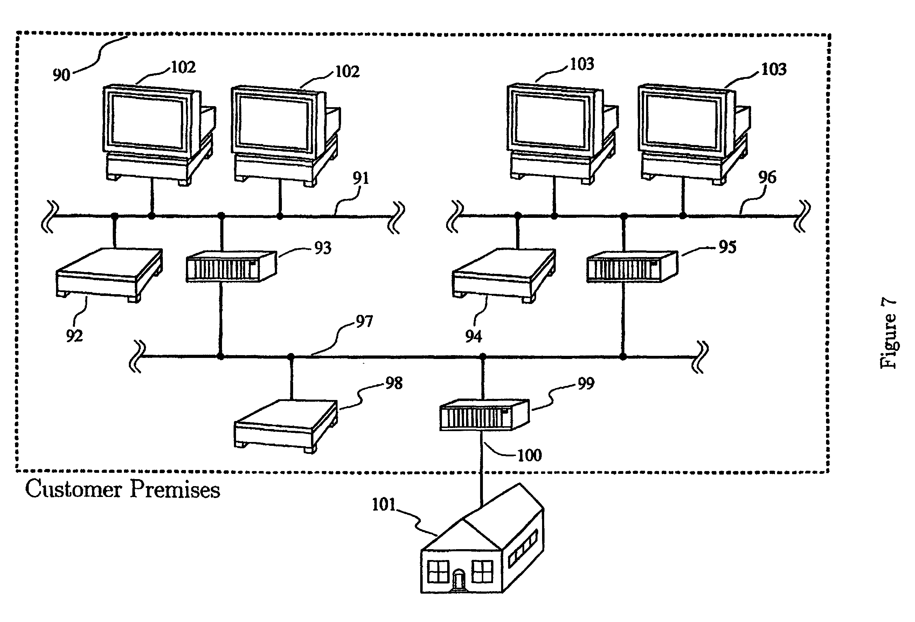

Figure 7 shows a system that uses a hierarchy of security servers inside a large customer premises 90. The PCs 102 103, on separate LAN subnets 91, 96, connect to local cache security servers 92 94. The LAN subnets 91 and 96 are connected to a backbone LAN 97 by the router/firewalls 93 and 95. The LAN 97 has connected a slave security server 98 that has access via a gateway/firewall 99 to a WAN 100. In normal operation, the cache servers 92 94 communicate "challenge - response" packets directly to the slave security server 98. In the event that the slave server fails, or is unable to identify a part number, the cache servers can communicate "challenge - response" packets off site with the SSP 101.

## Claims

1. An electronic immobilisation device (IPD), for protecting electronic equipment associated therewith, and for use with a remote validating means (SSP), the immobilisation device comprising:
generating means (40,41,42) for generating a challenge code (Cn);
means (50) for providing an identification code (P) uniquely identifying the electronic immobilisation device (IPD);
output means for outputting said challenge code (Cn) and said identification code (P) to said remote validating means (SSP);
input means for receiving a response code (Rn) from said validating means;
first processing means (46) for producing a valid response code (VRn) from said challenge code (Cn) using a first cryptographic key (K₂) and a first algorithm, said first cryptographic key and/or algorithm being dependent on said identification code (P);
means (49) for comparing the valid response code (VRn) and the response code (Rn), and if the comparison is successful, providing an enabling signal, and
immobilisation means for inhibiting or restricting operation of the protected electronic equipment, said immobilisation means being deactivated by said enabling signal.

2. An electronic immobilisation device according to claim 1 further comprising second processing means (43) for producing an authentication code (An) from said challenge code (Cn) using a second cryptographic key (K₁) and a second algorithm, the second cryptographic key and/or second algorithm being dependent on said identification code (P), wherein said output means outputs said authentication code (An) to said remote validating means.

3. An electronic immobilisation device according to claim 1 or 2 wherein the generating means (40,41,42) comprises non-volatile storage means (40) to produce a non-recurring sequence of challenge codes (Cn).

4. An electronic immobilisation device according to any one of the preceding claims wherein the generating means (40,41,42) further comprises cryptographic means (41,42), to produce an unpredictable sequence challenge codes (Cn).

5. An electronic immobilisation according to claim 3 or 4, wherein the sequence of challenge codes is dependent on the identification code (P).

6. An electronic immobilisation device according to any one of the preceding claims wherein the challenge code (Cn) produced by the generating means does not change until said enabling signal is received.

7. An electronic immobilisation device according to any one of the preceding claims further comprising timer means for controlling the repetition of challenge code generation, outputting, response code processing, and comparison at prescribed intervals.

8. An electronic immobilisation device according to claim 2 or any claim dependent thereon, wherein the first and second processing means use different cryptographic keys and/or algorithms.

9. An electronic immobilisation device according to any one of the preceding claims wherein the electronic immobilisation device (IPD) is associated with the protected electronic equipment by being: electrically connected to, attached to, enclosed in or integrated with the protected electronic equipment.

10. An electronic immobilisation device according to any one of the preceding claims wherein the immobilisation means allows at least partial operation of the protected electronic equipment for a predetermined time without having received said enabling signal.

11. A security system incorporating an electronic immobilisation device (IPD) according to any one of the preceding claims, and said remote validating means (SSP), the remote validating means comprising:
first look-up means for retrieving from database status information of the electronic immobilisation device using said identification code (P) to locate the appropriate database records;
second look-up means for retrieving from a database at least the first cryptographic key and/or first algorithm of the electronic immobilisation device using said identification code (P) to locate the appropriate database records;
third processing means (45), using said first cryptographic key and first algorithm, for processing the challenge code (Cn) received from the electronic immobilisation device, to produce said response code (Rn), and selective output means for selectively outputting said response code (Rn) dependent on said status information.

12. A security system according to claim 11, when dependent on claim 2, the validating means (SSP) further comprising:
fourth processing means (44) for processing the challenge code (Cn) to produce a valid authentication code (VAn) using second cryptographic key (K₁) and second algorithm, the second cryptographic key and/or second algorithm being dependent on said identification code (P);
means for comparing the authentication code (An) received from the electronic immobilisation device with said valid authentication code (VAn), wherein said selective output means does not output a response code (Rn) if the comparison is not successful.

13. A security system according to claims 11 or 12, wherein the remote validating means (SSP) further comprises identification code validation means (51) wherein said selective output means does not output a response code (Rn) if the identification code (P) is not valid.

14. A method of validating an electronic immobilisation device (IPD) for protecting electronic equipment associated therewith comprising in the electronic immobilisation device the steps of:
generating (40,41,42) a challenge code (Cn);
outputting to a remote validating means (SSP) the challenge code (Cn) and an identification code (P) uniquely identifying the electronic immobilisation device (IPD);
receiving a response code (Rn) from said remote validating means (SSP);
processing (46) the challenge code (Cn) to produce a valid response code (VRN) using a first cryptographic key (K₂) and a first algorithm, the first cryptographic key and/or the first algorithm being dependent on said identification code (P);
comparing (49) said valid response code (VRn) and said response code (Rn); and
if the comparison is successful, enabling said electronic equipment.

15. A method according to claim 14, further comprising in the electronic immobilisation device (IPD) the steps of:
processing (43) the challenge code (Cn) to produce an authentication code (An) from said challenge code (Cn) using a second cryptographic key (K₁) and a second algorithm, the second cryptographic key and/or second algorithm being dependent on said identification code (P) and
outputting the authentication code (An) to the remote validating means (SSP).

16. A method of validating an electronic immobilisation device (IPD) for protecting electronic equipment according to claims 14 or 15 comprising in the remote validating means (SSP) the steps of:
receiving a challenge code (Cn) and identification code (P) from said electronic immobilisation device (IPD);
obtaining status information of said electronic immobilization device from a database using said identification code (P);
obtaining at least the first cryptographic key and at least the first algorithm of said electronic immobilisation device from a database using said identification code (P);
processing the challenge code (Cn) to produce a response code (Rn) using said first cryptographic key and first algorithm; and
selectively outputting said response code (Rn) dependent on said status information.

17. A method according to claim 16 further comprising in the remote validating means (SSP) the steps of:
processing the challenge code (Cn) to produce a valid authentication code (VAn) from said challenge code (Cn) using said second cryptographic key (K₁) and said second algorithm, said second cryptographic key and/or said second algorithm being dependent on said identification code (P);
receiving an authentication code (An) from said electronic immobilisation device;
comparing said authentication code (An) and said valid authentication code (VAn);
inhibiting the output of said response code if said comparison is not successful.

## Patentansprüche

1. Elektronische Blockierungsvorrichtung (IPD) zum Schützen einer zugeordneten elektronischen Ausrüstung sowie zur Verwendung in Verbindung mit einer Fernvalidierungseinrichtung (SSP), wobei die Blockierungsvorrichtung folgendes umfasst:
eine Erzeugungseinrichtung (40, 41, 42) zum Erzeugen eines Abfragecodes (Cn);
eine Einrichtung 850) zum Vorsehen eines Identifikationscodes (P), der die elektronische Blockierungsvorrichtung (IPD) eindeutig identifiziert;
eine Ausgabeeinrichtung zur Ausgabe des genannten Abfragecodes (Cn) und des genannten Identifikationscodes (P) an die genannte Fernvalidierungseinrichtung (SSP);
eine Eingabeeinrichtung zum Empfangen eines Antwortcodes (Rn) von der genannten Validierungseinrichtung;
eine erste Verarbeitungseinrichtung (46) zum Erzeugen eines gültigen Antwortcodes (VRn) aus dem genannten Abrufcode (Cn) unter Verwendung eines ersten kryptografischen Schlüssels (K₂) und eines erstes Algorithmus, wobei der genannte erste kryptografische Schlüssel und/oder der Algorithmus von dem genannten Identifikationscode (P) abhängig sind;
eine Einrichtung (49) zum Vergleichen des gültigen Antwortcodes (VRn) und des Antwortcodes (Rn), und Vorsehen eines Freigabesignals bei einem erfolgreichen Vergleich; und
eine Blockierungseinrichtung zum Sperren oder Einschränken des Betriebs der geschützten elektronischen Ausrüstung, wobei die genannte Blockierungseinrichtung durch das genannte Freigabesignal deaktiviert wird.

2. Elektronische Blockierungsvorrichtung nach Anspruch 1, wobei die Vorrichtung ferner eine zweite Verarbeitungseinrichtung (43) zum Erzeugen eines Authentifikationscodes (An) aus dem genannten Abrufcodes (Cn) unter Verwendung eines zweiten kryptografischen Schlüssels (K₁) und eines zweiten Algorithmus umfasst, wobei der genannte zweite kryptografische Schlüssel und/oder der zweite Algorithmus von dem genannten Identifikationscode (P) abhängig sind, wobei die genannte Ausgabeeinrichtung den genannten Authentifikationscode (An) an die genannte Fernvalidierungseinrichtung ausgibt.

3. Elektronische Blockierungsvorrichtung nach Anspruch 1 oder 2, wobei die Erzeugungseinrichtung (40, 41, 42) eine nichtflüchtige Speichereinrichtung (40) zum Erzeugen einer einmaligen Folge von Abrufcodes (Cn) umfasst.

4. Elektronische Blockierungsvorrichtung nach einem der vorstehenden Ansprüche, wobei die Erzeugungseinrichtung (40, 41, 42) ferner eine kryptografische Einrichtung (41, 42) zum Erzeugen einer unvorhersehbaren Folge von Abrufcodes. (Cn) umfasst.

5. Elektronische Blockierungsvorrichtung nach Anspruch 3 oder 4, wobei die Abrufcodefolge von dem Identifikationscode (P) abhängig ist.

6. Elektronische Blockierungsvorrichtung nach einem der vorstehenden Ansprüche, wobei sich der durch die Erzeugungseinrichtung erzeugte Abrufcode (Cn) nicht ändert, bis das genannte Freigabesignal empfangen worden ist.

7. Elektronische Blockierungsvorrichtung nach einem der vorstehenden Ansprüche, wobei die Vorrichtung ferner eine Zeitgebereinrichtung zur Steuerung der Wiederholung der Erzeugung des Abrufcodes, der Ausgabe, der Antwortcodeverarbeitung und des Vergleichs in vorgeschriebenen Intervallen umfasst.

8. Elektronische Blockierungsvorrichtung nach Anspruch 2 oder einem Unteranspruch dessen, wobei die erste und zweite Verarbeitungseinrichtung verschiedene kryptografische Schlüssel und/oder Algorithmen verwenden.

9. Elektronische Blockierungsvorrichtung nach einem der vorstehenden Ansprüche, wobei die elektronische Blockierungsvorrichtung (IPD) der geschützten elektronischen Ausrüstung zugeordnet ist, indem: sie mit der geschützten elektronischen Ausrüstung elektrisch verbunden, an dieser angebracht, in diese eingeschlossen oder integriert ist.

10. Elektronische Blockierungsvorrichtung nach einem der vorstehenden Ansprüche, wobei die Blockierungseinrichtung zumindest einen teilweisen Betrieb der geschützten elektronischen Ausrüstung über einen vorbestimmten Zeitraum ermöglicht, ohne dass das genannte Freigabesignal empfangen worden ist.

11. Sicherheitssystem mit einer elektronischen Blockierungsvorrichtung (IPD) gemäß einem der vorstehenden Ansprüche sowie der genannten Fernvalidierungseinrichtung (SSP), wobei die genannte Fernvalidierungseinrichtung folgendes umfasst:
eine erste Verweiseinrichtung zum Abrufen von Datenbank-Statusinformationen der elektronischen Blockierungsvorrichtung unter Verwendung des genannten Identifikationscodes (P) zum Lokalisieren der entsprechenden Datenbank-Datensätze;
eine zweite Verweiseinrichtung zum Abrufen aus einer Datenbank mindestens des ersten kryptografischen Schlüssels und/oder ersten Algorithmus der elektronischen Blockierungsvorrichtung unter Verwendung des genannten Identifikationscodes (P) zum Lokalisieren der entsprechenden Datenbank-Datensätze;
eine dritte Verarbeitungseinrichtung (45), welche den genannten ersten kryptografischen Schlüssel und den ersten Algorithmus verwendet, um den von der elektronischen Blockierungsvorrichtung empfangenen Abrufcode (Cn) zu verarbeiten, um den genannten Antwortcode (Rn) zu erzeugen, und mit einer selektiven Ausgabeeinrichtung zur selektiven Ausgabe des genannten Antwortcodes (Rn) abhängig von den genannten Statusinformationen.

12. Sicherheitssystem nach Anspruch 11, wobei die Validierungseinrichtung (SSP) abhängig von Anspruch 2 ferner folgendes umfasst:
eine vierte Verarbeitungseinrichtung (44) zur Verarbeitung des Abrufcodes (Cn) zur Erzeugung eines gültigen Authentifikationscodes (VAn) unter Verwendung des zweiten kryptografischen Schlüssels (K₁) und des zweiten Algorithmus, wobei der zweite kryptografische Schlüssel und/oder der zweite Algorithmus von dem genannten Identifikationscode (P) abhängig sind;
eine Einrichtung zum Vergleichen des von der elektronischen Blockierungsvorrichtung empfangenen Authentifikationscodes (An) mit dem genannten gültigen Authentifikationscode (VAn), wobei die genannte selektive Ausgabeeinrichtung bei einem erfolglosen Vergleich keinen Antwortcode (Rn) ausgibt.

13. Sicherheitssystem nach Anspruch 11 oder 12, wobei die Fernvalidierungseinrichtung (SSP) ferner eine Identifikationscode-Validierungseinrichtung (51) umfasst, wobei die genannte selektive Ausgabeeinrichtung keinen Antwortcode (Rn) ausgibt, wenn der Identifikationscode (P) ungültig ist.

14. Verfahren zum Validieren einer elektronischen Blockierungsvorrichtung (IPD) zum Schützen einer zugeordneten elektronischen Ausrüstung, wobei das Verfahren in der elektronischen Blockierungsvorrichtung die folgenden Schritte umfasst:
Erzeugen (40, 41, 42) eines Abrufcodes (Cn);
Ausgabe des Abrufcodes (Cn) und eines die elektronische Blockierungsvorrichtung (IPD) eindeutig identifizierenden Identifikationscodes (P) an eine Fernvalidierungseinrichtung (SSP);
Empfangen eines Antwortcodes (Rn) von der genannten Fernvalidierungseinrichtung (SSP);
Verarbeiten (46) des Abrufcodes (Cn) zur Erzeugung eines gültigen Antwortcodes (VRN) unter Verwendung eines ersten kryptografischen Schlüssels (K₂) und eines ersten Algorithmus, wobei der erste kryptografische Schlüssel und/oder der erste Algorithmus von dem genannten Identifikationscode (P) abhängig sind;
Vergleichen (49) des genannten gültigen Antwortcodes (VRn) und des genannten Antwortcodes (Rn); und
Freigabe der genannten elektronischen Ausrüstung bei erfolgreichem Vergleich.

15. Verfahren nach Anspruch 14, wobei das Verfahren in der elektronischen Blockierungsvorrichtung (IPD) ferner die folgenden Schritte umfasst:
Verarbeiten (43) des Abrufcodes (Cn) zur Erzeugung eines Authentifikationscodes (An) aus dem genannten Abrufcode (Cn) unter Verwendung eines zweiten kryptografischen Schlüssels (K₁) und eines zweiten Algorithmus, wobei der zweite kryptografische Schlüssel und/oder der zweite Algorithmus von dem genannten Identifikationscode (P) abhängig sind; und
Ausgabe des Authentifikationscodes (An) an die Fernvalidierungseinrichtung (SSP).

16. Verfahren zum Validieren einer elektronischen Blockierungsvorrichtung (IPD) zum Schützen einer elektronischen Ausrüstung gemäß Anspruch 14 oder 15, wobei das Verfahren in der Fernvalidierungseinrichtung (SSP) die folgenden Schritte umfasst:
Empfangen eines Abrufcodes (Cn) und eines Identifikationscodes (P) von der genannten elektronischen Blockierungsvorrichtung (IPD);
Abrufen von Statusinformationen der genannten elektronischen Blockierungsvorrichtung von einer Datenbank unter Verwendung des genannten Identifikationscodes (P);
Abrufen mindestens des ersten kryptografischen Schlüssels und mindestens des ersten Algorithmus der genannten elektronischen Blockierungsvorrichtung aus einer Datenbank unter Verwendung des genannten Identifikationscodes (P);
Verarbeiten des Abrufcodes (Cn) zur Erzeugung eines Antwortcodes (Rn) unter Verwendung des genannten ersten kryptografischen Schlüssels und des ersten Algorithmus; und
selektive Ausgabe des genannten Antwortcodes (Rn) abhängig von den genannten Statusinformationen.

17. Verfahren nach Anspruch 16, wobei das Verfahren in der Fernvalidierungseinrichtung (SSP) ferner die folgenden Schritte umfasst:
Verarbeiten des Abrufcodes (Cn) zum Erzeugen eines gültigen Authentifikationscodes (VAn) aus dem genannten Abrufcoe (Cn) unter Verwendung des genannten zweiten kryptografischen Schlüssels (K₁) und des genannten zweiten Algorithmus, wobei der genannte zweite kryptografische Schlüssel und/oder der genannte zweite Algorithmus von dem genannten Identifikationscode (P) abhängig sind;
Empfangen eines Authentifikationscodes (An) von der genannten elektronischen Blockierungsvorrichtung;
Vergleichen des genannten Authentifikationscodes (An) und des genannten gültigen Authentifikationscodes (VAn);
Sperren der Ausgabe des genannten Antwortcodes, wenn der genannte Vergleich nicht erfolgreich ist.

## Revendications

1. Dispositif d'immobilisation électronique (IPD) pour un équipement de protection électronique associé à celui-ci et pour l'utilisation avec des moyens de validation à distance (SSP), ce dispositif d'immobilisation comprenant :
des moyens de génération (40, 41, 42) pour la génération d'un code « challenge » (Cn) ;
un moyen (50) pour la fourniture d'un code d'identification (P) identifiant de façon unique le dispositif d'immobilisation électronique (IPD) ;
un moyen de sortie pour générer ledit code « challenge » (Cn) et ledit code d'identification (P) audit moyen de validation à distance (SSP) ;
un moyen d'entrée pour recevoir un code de réponse (Rn) dudit moyen de validation ;
un premier moyen de traitement (46) pour produire une réponse valide (VRn) dudit code « challenge » (Cn) en utilisant un premier code cryptographique (K₂) et un premier algorithme, ledit premier code cryptographique et/ou algorithme dépendant dudit code d'identification (P) ;
un moyen (49) pour comparer le code de réponse valide (VRn) et le code de réponse (Rn) et, si la comparaison aboutit, pour délivrer un signal d'activation, et
un moyen d'immobilisation pour inhiber ou limiter l'opération de l'équipement électronique protégé, ledit moyen d'immobilisation étant désactivé par ledit signal d'activation.

2. Dispositif d'immobilisation électronique selon la revendication 1 comprenant également un selon moyen de traitement (43) pour produire un code d'authentification (An) depuis ledit code « challenge » (Cn) en utilisant un second code cryptographique (K₁) et un second algorithme, ce second code cryptographique et/ou ce second algorithme dépendant dudit code d'identification (P), dans lequel ledit moyen de sortie génère ledit code d'authentification (An) vers ledit moyen de validation à distance.

3. Dispositif d'immobilisation électronique selon la revendication 1 ou 2 dans lequel les moyens de génération (40, 41, 42) comprennent un moyen de stockage non volatile (40) pour produire une séquence non récurrente de codes « challenge » (Cn).

4. Dispositif d'immobilisation électronique selon l'une quelconque des revendications précédentes dans lequel les moyens de génération (40, 41, 42) comprennent également des moyens cryptographiques (41, 42) pour produire une séquence imprédictible de codes « challenge » (Cn).

5. Dispositif d'immobilisation électronique selon la revendication 3 ou 4, dans lequel la séquence de codes « challenge » dépend du code d'identification (P).

6. Dispositif d'immobilisation électronique selon l'une quelconque des revendications précédentes dans lequel le code « challenge » (Cn) produit par les moyens de génération ne change pas jusqu'à réception dudit signal d'activation.

7. Dispositif d'immobilisation électronique selon l'une quelconque des revendications précédentes comprenant également un moyen d'horloge pour contrôler la répétition de la génération du code «challenge», la sortie, le traitement du code de réponse, et la comparaison à intervalles spécifiés.

8. Dispositif d'immobilisation électronique selon la revendication 2 ou une quelconque revendication dépendant de celle-ci, dans laquelle le premier et le second moyens de traitement utilisent des codes cryptographiques et/ou algorithmes différents.

9. Dispositif d'immobilisation électronique selon l'une quelconque des revendications précédentes dans lequel ce dispositif d'immobilisation électronique (IPD) est associé à l'équipement électronique protégé en étant connecté électriquement, associé à, inclus dans ou intégré à l'équipement électronique protégé.

10. Dispositif d'immobilisation électronique selon l'une quelconque des revendications précédentes dans lequel le moyen d'identification permet au moins le fonctionnement partiel de l'équipement électronique protégé pour une durée prédéterminée sans avoir reçu ledit signal d'activation.

11. Système de sécurité incorporant un dispositif d'immobilisation électronique (IPD) selon l'une quelconque des revendications précédentes, et ledit moyen de validation à distance (SSP), ce moyen de validation à distance comprenant :
un premier moyen de consultation pour extraire des informations d'état de la base de données du dispositif d'immobilisation électronique en utilisant ledit code d'identification (P) pour localiser les enregistrements appropriés de la base de données ;
un second moyen de consultation pour extraire de la base de données au moins le premier code cryptographique et/ou le premier algorithme du dispositif d'immobilisation électronique en utilisant ledit code d'identification (P) pour localiser les enregistrements appropriés de la base de données ;
un troisième moyen de traitement (45), en utilisant ledit premier code cryptographique et le premier algorithme, pour traiter le code « challenge » (Cn) reçu du dispositif d'immobilisation électronique, pour produire ledit code de réponse (Rn), et un moyen de sortie sélectif pour produire sélectivement ledit code de réponse (Rn) dépendant desdites informations d'état.

12. Système de sécurité selon la revendication 11, lorsqu'elle dépend de la revendication 2, le moyen de validation (SSP) comprenant également :
un quatrième mode de traitement (44) pour traiter le code « challenge » (Cn) pour produire un code d'authentification valide (VAn) en utilisant le second code cryptographique (K₁) et le second algorithme, ce second code cryptographique et/ou ce second algorithme dépendant dudit code d'identification (P) ;
un moyen pour comparer le code d'authentification (An) reçu du dispositif d'immobilisation électronique (VAn) avec ledit code d'authentification (VAn), dans lequel ledit moyen de sortie sélectif ne génère pas de code de réponse (Rn) si la comparaison n'a pas abouti.

13. Système de sécurité selon la revendication 11 ou 12, dans lequel le moyen de validation à distance (SSP) comprend également un moyen de validation de code d'identification (51), dans lequel ledit moyen de sortie sélectif ne produit pas de code de réponse (Rn) si le code d'identification (P) n'est pas valide.

14. Procédé de validation d'un dispositif d'immobilisation électronique (IPD) pour protéger l'équipement électronique associé à celui-ci, comprenant, dans le dispositif d'immobilisation électronique, des étapes de :
génération (40, 41, 42) d'un code « challenge » (Cn) ;
sortie, vers un moyen de validation à distance (SSP), ce code « challenge » (Cn) et un code d'identification (P) identifiant de façon unique le dispositif d'immobilisation électronique (IPD) ;
réception d'un code de réponse (Rn) dudit moyen de validation (SSP) ;
traitement (46) du code « challenge » (Cn) pour produire un code de réponse valide (VRn) en utilisant un premier code cryptographique (K₂) et un premier algorithme, ce premier code cryptographique et/ou ce premier algorithme dépendant dudit code d'identification (P) ;
comparaison (49) du code de réponse valide (VRn) et dudit code de réponse (Rn) ; et
si la comparaison aboutit, activation dudit équipement électronique.

15. Procédé selon la revendication 14, comprenant également, dans le dispositif d'immobilisation électronique (IPD), les étapes de :
traitement (46) du code « challenge » (Cn) pour produire un code d'authentification (An) à partir dudit code « challenge » (Cn), en utilisant un second code cryptographique (K₁) et un second algorithme, ce second code cryptographique (K₁) et ce second algorithme dépendant dudit code d'identification (P) et
sortie du code d'authentification (An) vers le moyen de validation à distance (SSP).

16. Procédé de validation d'un dispositif d'immobilisation électronique (IPD) pour protéger l'équipement électronique selon la revendication 14 ou 15, comprenant, dans le moyen de validation à distance (SSP), les étapes de :
réception d'un code « challenge » (Cn) et d'un code d'identification (P) depuis ledit dispositif d'immobilisation électronique (IPD) ;
obtention d'informations d'état dudit dispositif d'immobilisation électronique (IPD) depuis une base de données en utilisant le code d'identification (P) ;
obtention d'au moins le premier code cryptographique depuis une base de données en utilisant ledit code d'identification (P) ;
traitement du code « challenge » (Cn) et du code d'identification (P) dudit dispositif d'immobilisation électronique (IPD) ;
sortie sélective dudit code de réponse (Rn) en fonction desdits informations d'état.

17. Procédé selon la revendication 16 comprenant également, dans le moyen de validation à distance, les étapes de :
traitement du code « challenge » (Cn) pour produire un code d'authentification valide (VAn) depuis ledit code « challenge » (Cn) en utilisant ledit second code cryptographique (K₁) et ledit second algorithme, ledit second code cryptographique et/ou ledit second algorithme dépendant dudit code d'identification (P) ;
réception d'un code d'authentification (An) dudit dispositif d'immobilisation électronique ;
comparaison dudit code d'authentification (An) et dudit code d'authentification (VAn) ;
inhibition de la sortie dudit code de réponse si ladite comparaison n'aboutit pas.
